# EUROPEAN PATENT APPLICATION

(11) **EP 2 845 747 A1**
(43) Date of publication of application: **11.03.2015**
(21) Application number: 14184017.3
(22) Date of filing: 09.09.2014
(51) Int. Cl.: B43K 19/14

(54) **Thermochromic solid writing instrument**

(30) Priority: 09.09.2013 JP 2013186742; 09.09.2013 JP 2013186743
(71) Applicant: Kabushiki Kaisha Pilot Corporation, Chuo-ku Tokyo-to (JP)
(72) Inventor: Tozuka, Taro, Kanagawa-ken (JP); Inui, Taro, Kanagawa-ken (JP); Ishi, Naoshi, Kanagawa-ken (JP); Kobayashi, Masao, Kanagawa-ken (JP); Nakamura, Hisashi, Kanagawa-ken (JP)
(74) Representative: Charlton, Peter John

(57) **Abstract**

[Problems to be Solved]

The invention provides a thermochromic solid writing instrument, with which crazing at a decorative part to be formed on an outer surface of a casing does not occur, and decrease in the holding power on a solid core due to a volume change of the solid core hardly occurs.

[Solution]

A thermochromic solid writing instrument comprising a solid core containing at least a reversible thermochromic microcapsuled pigment and a casing holding the solid core. An outer surface of the casing includes a decorative part having a display with a color, a letter, a symbol, or a figure, or a combination thereof. Further, a solid writing instrument of the invention is characterized in that the decorative part is formed of a flexible film, and/or a low heat conductivity layer is provided between the casing and the solid core.

## Description

### [Technical Field]

The present invention relates to a solid writing instrument, more particularly, to a thermochromic solid writing instrument, which can create a script having reversible thermochromism.

### [Background Art]

A solid writing instrument using a reversible thermochromic composition that can memorize enantiotropically the states before and after a color change in a certain temperature range such as normal temperature has been heretofore proposed (for example, Patent Literature 1 to 3).

The solid writing instrument creates a script, which causes color change according to a temperature change, by using a reversible thermochromic composition singly or the same encapsulated in a microcapsule as a colorant to be added into a wax, namely an excipient. Especially, when a microcapsuled pigment encapsulating a thermal color extinction type reversible thermochromic composition is used, the script can be easily erased by frictional heat, and therefore it can be used as a highly convenient writing instrument allowing easy correction of once written information, *etc.,* and can be applied, for example, to writing in a notebook or a memo book, or to drawing.

Meanwhile, with respect to a solid writing instrument, a core is generally contained in a casing made of wood, a synthetic resin, or the like, for example as a pencil or a colored pencil for the sake of protection of the core, easy grip, and prevention of staining on fingers (for example, Patent Literature 4). Such a solid writing instrument is provided with a decorative part on the outer surface of the casing with letters or symbols indicating core hardness, core color, product name, producer name, *etc.* (for example, Patent Literature 5).

### [Citation List]

### [Patent Literature]

[Patent Literature 1] Japanese Unexamined Utility Model Application Publication No. H7-6248
[Patent Literature 2] Japanese Unexamined Patent Application Publication No. 2008-291048
[Patent Literature 3] Japanese Unexamined Patent Application Publication No. 2009-166310
[Patent Literature 4] Japanese Unexamined Patent Application Publication No. 2010-82868
[Patent Literature 5] Japanese Utility Model No. 2504689

### [Non Patent Literature]

"Microcapsule - Production Method, Properties, and Applications", co-written by Kondo Tamotsu, and Koishi Masumi, Sankyo Publishing Co., Ltd., 1977

### [Summary of Invention]

### [Technical Problem]

Although such a casing as the wood casing has been heretofore broadly used owing to a superior whittling property, there has been a risk of crazing at a decorative part on the outer surface of the casing caused by relatively large volume change due to moisture absorption with time, thermal expansion or contraction, or the like.

Meanwhile, Patent Literature 1 discloses a solid writing instrument utilizing a thermochromic composition. Although the solid writing instrument is a superior writing instrument capable of color change or color extinction of a script, there has been a problem that the expansion or contraction of a core itself due to a volume change caused by crystallization of a thermochromic composition by heating or cooling is relatively large.

As the result, when a casing holds a solid core containing a thermochromic composition, there has been a problem, if, for example, the coefficient of thermal expansion of the solid core and the coefficient of thermal expansion of the casing are significantly different, that detachment between the casing and the solid core may take place due to a volume change caused by a temperature change, which would impair the appearance, or decrease a holding power on the solid core.

Further, as described in Patent Literature 5, there has been a risk that, in a case where the outer surface of a casing holding a thermochromic solid core is subjected to hot stamping, film transferring, laser carving, silk screen printing, or the like, heat is generated, which may be conducted through the casing to reach the thermochromic solid core to trigger a thermal color change in the solid core. Especially, in the case of hot stamping or film transferring involving a high temperature treatment, such a drawback has been remarkable. Similarly, in a certain external environment, there is a risk that a thermal color change in a solid core may also occur, when the product is left at a high temperature during storage.

In a first embodiment of the present invention a thermochromic solid writing instrument is provided, with which crazing at a decorative part formed on the outer surface due to a volume change of a casing and a solid core does not occur and the holding power on a solid core hardly decreases. In a second embodiment of the present invention a thermochromic solid writing instrument is provided, with which a thermal color change in a solid core hardly occurs during production and storage.

### [Solution to Problem]

The present invention relates to:
1. A thermochromic solid writing instrument comprising a solid core containing at least a reversible thermochromic microcapsuled pigment and a casing holding the solid core, wherein an outer surface of the casing includes a decorative part having a display with a color, a letter, a symbol, or a figure, or a combination thereof, and the decorative part is formed of a flexible film.
2. The thermochromic solid writing instrument according to Paragraph 1 above provided with a middle layer, suppressing detachment caused by a volume change of the casing and the solid core, between an inner peripheral surface of the casing and an outer peripheral surface of the solid core.
3. The thermochromic solid writing instrument according to Paragraph 1 provided with a middle layer, having a thermal conductivity coefficient lower than that of the solid core, between an inner peripheral surface of the casing and an outer peripheral surface of the solid core.
4. The thermochromic solid writing instrument according to Paragraph 1 provided with a middle layer, having heat absorptivity higher than that of the reversible thermochromic microcapsuled pigment, between an inner peripheral surface of the casing and an outer peripheral surface of the solid core.
5. A thermochromic solid writing instrument comprising a solid core containing at least a reversible thermochromic microcapsuled pigment and a casing holding the solid core, wherein an outer surface of the casing includes a decorative part having a display with a color, a letter, a symbol, or a figure, or a combination thereof, and a low heat conductivity layer suppressing heat transport in a radial direction from the casing to the solid core is further provided between an inner peripheral surface of the casing and an outer peripheral surface of the solid core.
6. The thermochromic solid writing instrument according to Paragraph 5, wherein the low heat conductivity layer is a heat-insulating layer having a thermal conductivity coefficient lower than that of the solid core.
7. The thermochromic solid writing instrument according to Paragraph 5, wherein the low heat conductivity layer is a heat-absorbing layer having heat absorptivity higher than that of the reversible thermochromic microcapsuled pigment.
8. The thermochromic solid writing instrument according to any one of Paragraphs 1 to 7, wherein the posterior end of the solid core is positioned anterior to the posterior end of the casing in a longitudinal direction.

### [Advantageous Effects of Invention]

The present invention can provide a thermochromic solid writing instrument, with which crazing at a decorative part formed on the outer surface of a casing does not occur, and decrease in the holding power on a solid core due to a volume change of the solid core hardly occurs. The present invention can provide a thermochromic solid writing instrument, with which a thermal color change in a solid core hardly occurs during production and storage.

### [Brief Description of Drawings]

[Figure 1] Figure 1 is a longitudinal sectional view of a thermochromic solid writing instrument according to the present invention.
[Figure 2] Figure 2 is a perspective external view with respect to Figure 1.
[Figure 3] Figure 3 is a longitudinal sectional view showing a state before mounting a friction member.
[Figure 4] Figure 4 is an enlarged cross-sectional view along A-A in Figure 1.
[Figure 5] Figure 5 is an explanatory diagram showing a color change behavior of a script.

### [Description of Embodiments]

### <First Thermochromic Solid Writing Instrument>

In the first embodiment, a thermochromic solid writing instrument according to the present invention comprises a solid core containing at least a reversible thermochromic microcapsuled pigment and a casing holding the solid core, and is characterized in that the outer surface of the casing includes a decorative part having a display with a color, a letter, a symbol, or a figure, or a combination thereof, and the decorative part is formed of a flexible film.

According to the first embodiment, a buying motivation of consumers can be enhanced by preparing a decorative part with letters or patterns of a trade name, a color, *etc.* on the outer surface of the casing. Further according to the present invention the decorative part is formed of a flexible film. Consequently, even when a volume change of a solid core and a casing occurs, occurrence of crazing at the decorative part can be suppressed, and deterioration of the casing over time can be prevented.

### <Casing>

Examples of a material to be used for forming a casing according to the present invention include (i) wood, (ii) a thermoplastic resin, such as polystyrene, styrene/acrylonitrile copolymer, poly(vinyl alcohol), and polypropylene, and (iii) an elastomer, such as a styrene elastomer, an olefin elastomer, a urethane elastomer, a polyester elastomer, a polyamide elastomer, a vinyl chloride elastomer, and a fluorinated elastomer. Among them, wood is most preferable considering a whittling property and a thermal conductivity coefficient.

### < Decorative Part>

In the first embodiment of the present invention, it is essential that a decorative part is formed of a flexible film on the outer surface of a casing. Examples of the film to be used include a polyethylene film, a poly(vinyl chloride) film, a poly(vinyl alcohol) film, a polyester film, a polycarbonate film, a polypropylene film, a poly(ethylene terephthalate) film, a polystyrene film, and an ethylene-vinyl alcohol copolymer film. Among them, a poly(ethylene terephthalate) film is preferable considering flexibility and thermal dimensional stability.

A decorative part is preferably formed by transfer of a flexible film. From this, separation of the transferred film can be suppressed, and a casing can be protected from absorbing moisture and from contacting the outside air, so that a dimension stable over time can be obtained. Meanwhile, a decorative part may be not only a transferred layer from a film, but also a low air permeability layer, an adhesive layer, or the like, or even have a multilayer structure.

### <Solid Core>

In accordance with the present invention, a solid core contains at least a reversible thermochromic microcapsuled pigment. Further, the microcapsuled pigment contains a temperature sensitive allochroic color memory composition composed of a component (a), a component (b), and a component (c).

Further, in accordance with the present invention, a solid core of a thermochromic solid writing instrument can present enantiotropically a first coloration state and a second coloration state. Herein, the expression "to present enantiotropically a first coloration state and a second coloration state" means to present enantiotropically 2 colored states developing a color (1) and a color (2); a colored state and a colorless state; o colorless state and a colored state. In other words, in a case, where a first coloration state changes over to a second coloration state due to a temperature increase, a change from a color (1) to a color (2), and a change from a colored state to a colorless state, namely a thermal color extinction type change are included.

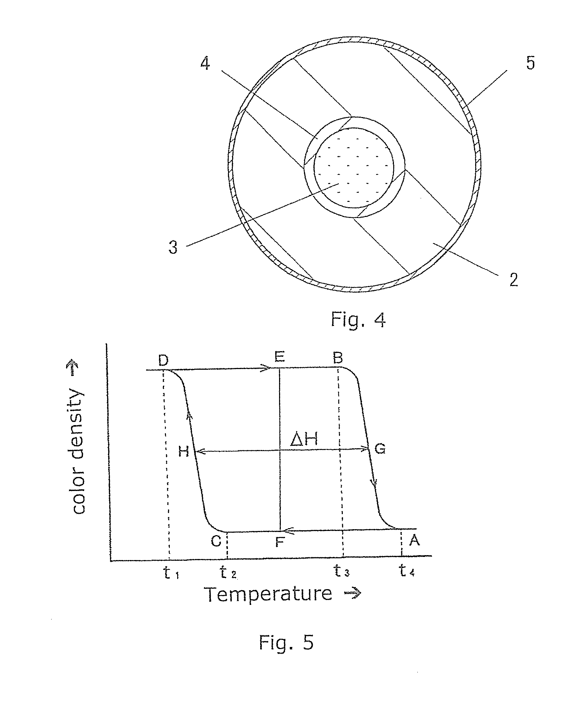

Color change behaviors of a script written with a solid writing instrument according to the present invention will be described taking a thermal color extinction type as an example referring to Figure 5. In Figure 5 the ordinate expresses color density, and the abscissa expresses temperature. The color density change with a temperature change progresses along the arrows. In this regard, A is a point expressing the density at a temperature t₄, at which a completely colorless state is produced (hereinafter occasionally referred to as "completely colorless temperature"), B is a point expressing the density at a temperature t₃, at which color extinction starts (hereinafter occasionally referred to as "color extinction initiation temperature"), C is a point expressing the density at a temperature t₂, at which color development starts (hereinafter occasionally referred to as "coloration initiation temperature"), and D is a point expressing the density at a temperature t₁, at which a completely colored state is produced (hereinafter occasionally referred to as "completely colored temperature"). A color changing temperature range is the temperature range between the t₁ and t₄, in which both the states of colored state and colorless state can coexist, and the temperature range between t₂ and t₃ is a temperature range, in which a completely colored state and a completely colorless state can be selectively produced.

Specifically, when a reversible thermochromic microcapsuled pigment in a colorless state is cooled down to a temperature not higher than the coloration initiation temperature, a change to a colored state can be initiated, and when the same is cooled down to a temperature not higher than the completely colored temperature, a completely colored state can be produced, which state can be maintained so long as the temperature of the reversible thermochromic microcapsuled pigment is not raised to the coloration initiation temperature.

Further, by applying heat generated by means of friction, *etc.* to a reversible thermochromic microcapsuled pigment in a colored state to raise the temperature to a temperature not less than the color extinction initiation temperature, a change to a colorless state can be initiated, or to a temperature not less than the completely colorless temperature, a completely colorless state can be produced, which state can be maintained so long as the temperature of the reversible thermochromic microcapsuled pigment is not lowered to the coloration initiation temperature.

The length of the line segment EF is a measure for representing a degree of a color change, and the length of the line segment HG passing through the midpoint of the line segment EF is a temperature range representing a degree of hysteresis (hereinafter occasionally referred to as "ΔH"). Presence of a ΔH value according to the present invention exhibits hysteresis characteristics, which maintain selectively the first coloration state and the second coloration state in a certain temperature range.

An example, states of a component (a), a component (b) and a component (c) contained in a temperature sensitive allochroic color memory composition in a colored state and a colorless state will be described below.

In a colored state components (a) and (b) contained in a temperature sensitive allochroic color memory composition interact with each other, a lactone ring possessed by a component (a) opens, and a component (c) is in a crystallized state.

When the temperature of the temperature sensitive allochroic color memory composition is raised to the melting point of the component (c) or higher, the component (c) melts. As the result, the reaction phase changes from a previous solid phase to a liquid phase, where the component (a) and the component (b) come to a dissolved state in the component (c), so that the interaction between the component (a) and the component (b) is blocked, the lactone ring possessed by the component (a) closes, and the temperature sensitive allochroic color memory composition comes into a colorless state.

Meanwhile, when the temperature of a temperature sensitive allochroic color memory composition in a colorless state is lowered to a temperature not higher than the solidifying point of a component (c), solidification starts and the reaction phase changes from a previous liquid phase to a solid phase. As the result, compounds composing the component (a) and component (b) precipitate to resume interaction with each other, so that the lactone ring possessed by the component (a) cleaves, and the temperature sensitive allochroic color memory composition comes into a colored state.

A component (a) is a component that determines the color, and an electron-donating compound that donates an electron to a component (b), which is a developer, for color development. As the component (a), a so-called leuco dye, which is ordinarily used for a heat-sensitive material such as a thermal recording paper, can be used. Specific examples thereof include a phthalide compound, such as diphenylmethane phthalide, and indolylphthalide; an azaphthalide compound, such as diphenylmethane azaphthalide, and phenylindolylazaphthalide; a fluoran compound; a styrynoquinoline compound; a diazarhodamine lactone compound; a pyridine compound; a quinazoline compound; and a bisquinazoline compound. A pyridine compound, a quinazoline compound, and a bisquinazoline compound are effective for color development of a fluorescent yellow to red color.

A component (b) is an electron accepting compound, and for example a compound is selected out of compounds having an active proton, pseudo-acidic compounds (compounds, which are not an acid but act as an acid in a composition to develop a color of the component (a)), and compounds having an electron hole. Among others, a compound to be selected from the compounds having an active proton is preferable. Examples of a compound having an active proton include a compound having a phenolic hydroxy group, such as a monophenolic compound and a polyphenolic compound, and a metal salt thereof; a carboxylic acid and a metal salt thereof, such as an aromatic carboxylic acid and a C2 to C5 aliphatic carboxylic acid, and a metal salt thereof; an acidic phosphoric acid ester and a metal salt thereof; and an azole compound and a derivative thereof, such as 1,2,3-triazole and a derivative thereof. Among them, a compound having a phenolic hydroxy group is preferable, because the same can express most effective thermochromism. The compounds may have a substituent, and examples thereof include compounds having as a substituent an alkyl group, an aryl group, an acyl group, an alkoxycarbonyl group, a carboxy group and an ester thereof, an amido group, and a halogen group; as well as a bisphenol, a trisphenol, and a phenol-aldehyde condensation resin. When a compound having an active proton is a metal salt, example of a metal contained in the metal salt include sodium, potassium, calcium, zinc, zirconium, aluminum, magnesium, nickel, cobalt, tin, copper, iron, vanadium, titanium, lead, and molybdenum.

Further, as an electron accepting compound a thermal color development type reversible thermochromic composition, such as a specific alkoxyphenolic compound having a C3 to C18 straight chain or branched chain alkyl group (Japanese Unexamined Patent Application Publication No. H11-129623), a specific hydroxybenzoic acid ester (Japanese Unexamined Patent Application Publication No. 2001-105732), and a gallic acid ester (Japanese Unexamined Patent Application Publication No. 2003-253149), can also be applied.

Specific examples of a component (c), which is a reaction medium effecting reversibly an electron transfer reaction in a specific temperature range by the component (a) and the component (b) contained in a temperature sensitive allochroic color memory composition encapsulated in a microcapsuled pigment, include an alcohol, an ester, a ketone, and an ether.

As the component (c) a carboxylic acid ester compound, which changes its color exhibiting a characteristic of large hysteresis with respect to a color density-temperature curve (difference in a curve plotting a color density change against a temperature change between a case where the temperature is changed from a low temperature to a high temperature side and a case where the temperature is changed from a high temperature side to a low temperature side), is a compound able to form a reversible thermochromic composition exhibiting a color memory characteristic, and has a ΔT value (melting point - cloudy point) from 5°C to less than 50°C, is preferable. For example, a carboxylic acid ester having a substituted aromatic ring in the molecule, an ester of a carboxylic acid having an unsubstituted aromatic ring and a C10 or more aliphatic alcohol, a carboxylic acid ester having a cyclohexyl group in the molecule, an ester of a C6 or more fatty acid and an unsubstituted aromatic alcohol or a phenol, an ester of a C8 or more fatty acid and a branched aliphatic alcohol, an ester of dicarboxylic acid and an aromatic alcohol or a branched aliphatic alcohol, dibenzyl cinnamate, heptyl stearate, didecyl adipate, dilauryl adipate, dimyristyl adipate, dicetyl adipate, distearyl adipated, Trilaurin, Trimyristin, Tristearin, Dimyristin, and Distearin can be used.

Further, a fatty acid ester compound obtained from an aliphatic monohydric alcohol having an odd carbon number of 9 or more and an aliphatic carboxylic acid having an even carbon number, and a fatty acid ester compound having a total carbon number of 17 to 23 obtained from *n*-pentyl alcohol or *n*-heptyl alcohol and an aliphatic carboxylic acid having an even carbon number of 10 to 16 may be also used.

Although the blend ratio of 3 component of (a), (b) and (c) included in a temperature sensitive allochroic color memory composition contained in a microcapsuled pigment is decided according to the density, the color change temperature, the color change form, and the type of each component, a blend ratio for obtaining desired characteristics is generally in a mass ratio, component (a) : component (b) : component (c) = 1 : 0.1 to 50 : 1 to 800 by mass, and more preferably, component (a) : component (b) : component (c) = 1 : 0.5 to 20 : 5 to 200. With respect to each component, two or more kinds may be mixed for use.

A microcapsuled pigment to be used in a solid core may contain, to the extent that the function is not affected, various additives, such as an antioxidant, a UV absorber, an infrared light absorption agent, a solubilizing agent, an antifungal and antibacterial agent.

The content of a microcapsuled pigment used in a solid core is preferably from 1 to 70 mass-% with reference to the total mass of a solid core usable for writing in a solid writing instrument. When the content is below the range, the developed color density tends to become low, and when it is beyond the range, the strength of the solid core usable for writing in a solid writing instrument tends to decrease. The content is preferably from 5 to 50 mass-%, and further preferably from 10 to 40 mass-%, and within the range both the strength of the solid core and the script density can be satisfied.

For a microcapsuled pigment according to the present invention the mass ratio of an internal material to a capsule wall is preferably internal material : capsule wall = 1 : 1 to 7 : 1. When the ratio of an internal material is above the range, a capsule wall becomes thin in terms of the thickness and vulnerable to pressure and heat, so that a microcapsule tends to be broken, and when it is below the range the density or visibility in a colored state tends to decrease. More preferable is internal material : capsule wall = 1 : 1 to 6 : 1, and within the range the density and visibility in a colored state can be high and a microcapsule is not broken.

Although there is no particular restriction on the size of a microcapsuled pigment to be used in a solid core, the average particle size is preferably from 0.1 to 50 µm. When the same is below the range, the developed color density tends to decrease, and when the same is beyond the range, the dispersion stability or processability in using the same for a solid core usable for writing in a solid writing instrument tends to decrease. The average particle size is more preferably from 0.3 to 30 µm. Within the range, the colored state is good and the dispersion stability and processability are improved.

The average particle size of a microcapsuled pigment is expressed herein by a volume-based D₅₀ value in a measurement of the particle size. As an example of measurement, a measurement is carried out with a Laser Diffraction/Scattering Particle Size Distribution Analyzer (LA-300: made by Horiba, Ltd., Ltd.), and an average particle size (median diameter) is calculated base on the measured values.

As a production method for the microcapsuled pigment, a generally known method as described, for example, in Non Patent Literature 1 ("Microcapsule - Production Method, Properties, and Applications", co-written by Kondo Tamotsu, and Koishi Masumi, Sankyo Publishing Co., Ltd., 1977), can be applied. Specific examples thereof include a coacervation method, an interfacial polymerization method, an interfacial polycondensation method, an *in-situ* polymerization method, an in-liquid drying method, an in-liquid curing method, a suspension polymerization method, an emulsion polymerization process, an air suspension coating method, and a spray drying method, and an appropriate one may be selected.

A solid core can be prepared, for example, by dispersing the afore-described microcapsuled pigment in an excipient and solidifying the same. As an excipient, a wax, a gelation agent, a clay, *etc.* can be used. As for a wax, any heretofore known waxes may be used, and specific examples thereof include a carnauba wax, a Japan wax, a beeswax, a microcrystalline wax, a montan wax, a candelilla wax, a sucrose fatty acid ester, a dextrin fatty acid ester, a polyolefin wax, a styrene-modified polyolefin wax, and a paraffin wax. As for a gelation agent, any heretofore known gelation agents may be used, and examples thereof include 12-hydroxystearic acid, a dibenzylidene sorbitol, a tribenzylidene sorbitol, an amino acid oil, and an alkali metal salt of a higher fatty acid. Examples of a clay mineral include kaolin, bentonite and montmorillonite. An excipient preferably contains at least one of a polyolefin wax, a sucrose fatty acid ester and a dextrin fatty acid ester. Specific examples thereof include waxes, such as polyethylene, polypropylene, polybutylene, an α-olefin polymer, an ethylene-propylene copolymer, and an ethylene-butene copolymer.

The polyolefin wax with a softening point in a range from 100°C to 130°C and a penetration of 10 or less is used especially preferably owing to a favorable writing feel. When the penetration exceeds 10, a solid core usable for writing in a solid writing instrument becomes too soft and writing tends to become difficult, and, further, in erasing a script the same is elongated over a paper surface (a wax is filmed to a thin layer) to stain a blank part on the writing surface or contaminate another paper with color or dirt.

Measuring methods of the softening point, and the penetration of a polyolefin wax are standardized by JIS K2207. As for a penetration value, 0.1 mm is expressed as penetration 1, and consequently a lower number means a higher hardness, and a larger number means a softer solid core usable for writing in a solid writing instrument.

Specific examples thereof include Neowax series (polyethylene: made by Yasuhara Chemical Co., Ltd.), SANWAX series (polyethylene: made by Sanyo Chemical Industries, Ltd.), Hi-WAX series (polyolefin: made by Mitsui Chemicals, Inc.), and A-C Polyethylene (polyethylene: made by Honeywell).

As the excipient for a solid core, that containing at least one of a sucrose fatty acid ester and a dextrin fatty acid ester can be preferably used, because the script density can be improved.

As a sucrose fatty acid ester, especially an ester using a C12 to C22 fatty acid as a constituent fatty acid is preferable, and one using palmitic acid, or stearic acid is more preferable. Specific examples thereof include RYOTO Sugar Ester series made by Mitsubishi-Kagaku Foods Corporation, and Sugar Wax series made by Dai-Ichi Kogyo Seiyaku Co., Ltd.

As a dextrin fatty acid ester, especially an ester using a C14 to C18 fatty acid as a constituent fatty acid is favorable, and one using palmitic acid, myristic acid, or stearic acid is more preferable. Specific examples thereof include Rheopearl series made by Chiba Flour Milling Co., Ltd.

The addition content of an excipient is preferably from 0.2 to 70 mass-% with reference to the total mass of a solid core usable for writing. When the same is below the range, there appears a tendency that a shape as a solid core usable for writing in a solid writing instrument can be hardly obtained. When the same is beyond the range, there appears a tendency that adequate script density can be hardly obtained. The range is preferably from 0.5 to 40 mass-%, and within the range both the shape of a solid core usable for writing in a solid writing instrument and the script density can be satisfied.

A solid core according to the present invention may contain, if necessary, various additives. Examples of an additive include a resin, a filler, a viscosity adjuster, an antifungal agent, an antiseptic agent, an antibacterial agent, an ultraviolet light prevention agent, a light stabilizing material, a heat-absorbing material and a perfume. The resin is added in order to improve the strength of a solid core usable for writing in a solid writing instrument, and for example a natural resin or a synthetic resin can be used. Specific examples thereof include an olefinic resin, a cellulose resin, a vinyl alcohol resin, a pyrrolidone resin, an acrylic resin, a styrenic resin, a styrene-acrylic resin, an amide resin, and a resin containing a basic group. Examples of the filler include talc, clay, silica, calcium carbonate, barium sulfate, alumina, mica, boron nitride, potassium titanate, and a glass flake, and especially talc or calcium carbonate is preferable from viewpoints of influence, *etc.* on a color change performance of a microcapsuled pigment and moldability. The filler is added in order to improve the strength of a solid core usable for writing in a solid writing instrument according to the present invention, and to adjust a writing feel. The addition content of a filler is preferably from 20 to 55 mass-% with reference to the total mass of a solid core usable for writing. When the same is below the range, there appears a tendency that the strength of a solid core usable for writing decreases, and when the same is beyond 55 mass-%, there appears a tendency that a color development property deteriorates, or the writing feel becomes inferior.

A thermochromic solid writing instrument according to the present invention can be accomplished by adding a nonthermochromic colorant, such as a dyestuff and a pigment, to a solid core, in a case where the first coloration state and the second coloration state exert a change between color (1) and color (2).

### <Middle Layer>

In the first embodiment of the present invention, a thermochromic solid writing instrument may be, if necessary, further provided with a middle layer between a casing and a solid core. A first embodiment of the middle layer has a function for suppressing detachment to be caused by difference between the volume change of a casing and the volume change of a solid core, when the volume of a casing or a solid core changes, for example, due to a temperature change or moisture absorption.

Examples of a material forming a middle layer include (i) a thermoplastic resin, such as poly(vinyl alcohol), a styrenic resin, and a styrene-acrylic resin; (ii) an elastomer, such as a styrene elastomer, an olefin elastomer, a urethane elastomer, a polyester elastomer, a polyamide elastomer, a vinyl chloride elastomer, and a fluorinated elastomer; a natural rubber; a synthetic rubber such as a silicon rubber; an elastomer resin having elasticity in a solid state, such as an ionomer resin. Among them, an elastomer resin having elasticity in a solid state is preferably contained, because the same can favorably deform itself and follow a volume change due to expansion or contraction of a solid core as the result of a temperature change, is superior in affinity to a solid core and moldability, and able to yield a high strength thermochromic solid writing instrument. Among others, a polymer produced by an addition polymerization of a monomer having an unsaturated bond is contained preferably.

Specific examples of a monomer having an unsaturated bond include (i) an olefinic compound, such as ethylene, propylene, butylene, 1,3-butadiene, 1,4-pentadiene, and cyclohexene; (ii) an ester of a vinyl alcohol and a carboxylic acid, such as vinyl acetate, vinyl propionate, and vinyl butyrate; (iii) an ester of acrylic acid or methacrylic acid and an alcohol, such as methyl acrylate, ethyl acrylate, butyl acrylate, methyl methacrylate, ethyl methacrylate, and butyl methacrylate; and (iv) a carboxylic acid having an unsaturated bond, such as acrylic acid, and methacrylic acid. The monomers having an unsaturated bond may be used singly or in a combination of 2 or more kinds. Especially, a copolymer polymerizing (i) an olefinic compound, and (ii) an ester of a vinyl alcohol and a carboxylic acid, or (iii) an ester of acrylic acid or methacrylic acid and an alcohol is preferable, and most preferable are an ethylene-vinyl acetate copolymer and a derivative thereof, and a copolymer of ethylene and an acrylate, such as an ethylene-methyl acrylate copolymer, an ethylene-ethyl acrylate copolymer, and an ethylene-butyl acrylate copolymer.

Although there are various structures with respect to an elastomer resin, the hardness is preferably high irrespective of the structure. In this regard, although the hardness of a substance can be represented according to various standards, the hardness of an elastomer resin is represented herein according to durometer hardness, and the durometer hardness (durometer A hardness) of an elastomer resin is preferably from 30 to 100, and more preferably from 60 to 95. In this regard, the durometer hardness is hardness determined from a deformation amount of a sample when an indenter is pressed on to a surface to be pressed of the sample. Specifically, it can be measured according to JIS-K7215.

There is no particular restriction on the molecular weight of an elastomer resin used according to the present invention, and a resin with an appropriate molecular weight depending on a kind of an elastomer resin may be used. For example, in the case of an ethylene-vinyl acetate copolymer, the number average molecular weight is preferably from 10,000 to 50,000, and more preferably from 25,000 to 35,000. In this regard, a number average molecular weight can be measured by an osmotic pressure method. Meanwhile, when the number average molecular weights of various resins having different molecular weights are to be measured, a calibration curve between melt flow rates and number average molecular weights measured by an osmotic pressure method is prepared in advance, and the number average molecular weight can be determined also from a melt flow rate.

In another embodiment, a middle layer is provided as a low heat conductivity layer suppressing heat transport in a radial direction from a casing to a solid core, so that unintended color change or color extinction of a solid core during produce and storage can be prevented. In this connection, a low heat conductivity layer means herein a layer which suppresses heat transport to prevent heat conduction to a solid core, and examples of the same include a heat-insulating layer suppressing heat transport by conduction, convection, or radiation, and a heat-absorbing layer suppressing heat transport to a solid core by means of heat absorption.

Examples of the heat-insulating layer suppressing heat transport by conduction, convection, or radiation include a layer with higher heat reflection compared to a solid core, and a layer with a lower thermal conductivity coefficient compared to a solid core. Specific examples of a material having a lower thermal conductivity coefficient compared to a solid core include (i) wood; (ii) a thermoplastic resin, such as polystyrene, styrene-acrylonitrile copoymer, poly(vinyl alcohol), and polypropylene; (iii) an elastomer, such as a styrene elastomer, an olefin elastomer, a urethane elastomer, a polyester elastomer, a polyamide elastomer, a vinyl chloride elastomer, and a fluorinated elastomer; a natural rubber; a synthetic rubber such as a silicon rubber; and an elastomer resin, such as an ionomer resin. Among them, in order that a low heat conductivity layer can follow favorably a volume change due to expansion or contraction of a solid core as the result of a temperature change, and therefore that a solid writing instrument superior in affinity between the solid core and the low heat conductivity layer, also superior in moldability, and having high strength can be yielded, in other words in order that both the affinity between the solid core and the low heat conductivity layer and the moldability can be satisfied, an elastomer resin having elasticity in a solid state is preferable. Among others, a polymer produced by an addition polymerization of a monomer having an unsaturated bond is preferable. As such a monomer having an unsaturated bond, the above-listed monomers may be used.

Further, examples of a heat-absorbing layer suppressing heat conduction to a solid core by absorbing heat from the outside include a layer having higher heat absorptivity compared to the reversible thermochromic microcapsuled pigment. Examples of a material forming a heat-absorbing layer include a heat-absorbing material. Further, examples of a component of the heat-absorbing material includes (i) an ester compound selected out of the group consisting of a sucrose fatty acid ester and a dextrin fatty acid ester, and (ii) a heat-absorbing compound having a melting point lower than the melting point of a reversible thermochromic component in a solid core.

As a sucrose fatty acid ester, especially an ester using a C12 to C22 fatty acid as a constituent fatty acid is preferable, and an ester of palmitic acid or stearic acid is more preferable for use. Specific examples thereof include RYOTO Sugar Ester (trade name) series (made by Mitsubishi-Kagaku Foods Corporation), and Sugar Wax (trade name) series (made by Dai-Ichi Kogyo Seiyaku Co., Ltd.).

As a dextrin fatty acid ester, especially an ester using a C14 to C18 fatty acid as a constituent fatty acid is preferable, and an ester of palmitic acid, myristic acid, or stearic acid is more preferable for use. Specific examples thereof include Rheopearl (trade name) series (made by Chiba Flour Milling Co., Ltd.).

Examples of a heat-absorbing compound include those having a melting point lower than the melting point of a reversible thermochromic component in a solid core, and specifically an organic compound, such as an alcohol, a carboxylic acid, an ester, an ether, a ketone, and an amide. More specifically, examples of an alcohol include lauryl alcohol, dodecyl alcohol, myristyl alcohol, pentadecyl alcohol, stearyl alcohol, nonadecyl alcohol, eicosyl alcohol, behenyl alcohol, seryl alcohol, melissyl alcohol, polyethylene glycol, and polypropylene glycol. Examples of a carboxylic acid include lauric acid, myristic acid, pentadecanoic acid, palmitic acid, stearic acid, nonadecylic acid, eicosanoic acid, behenic acid, and tetracosanoic acid.

The thermal conductivity coefficients (watt per meter per kelvin (W/(m·K)) of the solid core, the low heat conductivity layer, and the casing can be measured with, for example, AUTO (HC-072) made by EKO Instruments Co., Ltd. at an applied pressure of 250 Kg/m², a high temperature plate temperature of 35°C, and a low temperature plate temperature of 5°C.

It can be judged in a simplified method whether a low heat conductivity layer suppresses heat transport so as to impede heat conduction to a solid core, for example, by a following method.
A solid core and a low heat conductivity layer without a casing on a thermal sensor are placed on a heat sensor, and then heated with measuring a temperature change of the solid core and a contact portion of the heat sensor and the low heat conductivity layer. In a similar way, the temperature change of the solid core by itself and of the low heat conductivity layer by itself are measured. A difference of heat transport between the solid core and the low heat conductivity layer then can be caliculated.

A middle layer according to the present invention may contain an elastomer resin. Addition of an elastomer resin in a middle layer can improve the moldability and strength of a solid writing instrument. The addition content of an elastomer resin is decided according to the addition contents of a filler and an excipient, *etc.,* and is preferably from 1 mass-% to 10 mass-% with reference to the total mass of a middle layer, because the performance of a solid writing instrument is improved as described above.

A low heat conductivity layer may contain various resins according to the present invention, and preferably contains as a resin any one selected from the elastomer resins. However, a low heat conductivity layer may contain a resin other than the elastomer resins, to the extent that the effect of the present invention is not impaired. Examples of the resin include a thermoplastic resin, such as poly(vinyl alcohol), a styrenic resin, and a styrene-acrylic resin. Specifically, the content of such a resin is preferably 50 mass-% or less with reference to the total mass of resins contained in a low heat conductivity layer, more preferably 10 mass-% or less, and most preferably such a resin is not contained at all.

Further, the middle layer contains preferably a filler. By this the color changing property or the color extinguishing property of a script can be maintained favorably and the light resistance of a solid core can be improved. Even when a filler is added to a solid core, the moldability or the strength of a solid writing instrument can be improved. However, in the case of a solid core using a microcapsuled pigment as a colorant, some fillers may act on a microcapsuled pigment and affect a color changing property or a color extinguishing property, such as the color changing property or the color extinguishing property of a script. Therefore, by adding only a small amount of a filler or not adding it into a solid core, and adding a filler into a middle layer, a risk that the filler acts on a microcapsuled pigment in the solid core can be avoided, and the color changing property or the color extinguishing property can be maintained favorably.

Since in a conventional solid core a colorant was distributed throughout a solid core, a solid core was liable to lose its color after exposure to light for long time.
Therefore, when a solid writing instrument according to the present invention is provided with a middle layer, it is preferable that a filler is added into a middle layer, because it becomes possible to prevent a solid core containing a colorant from being directly irradiated with ultraviolet light, which affects the colorant, and as the result to improve the light resistance of a solid core usable for writing. Further, in a case where a middle layer contains a filler, effects, such as improvement of the moldability, suppression of decrease in the strength of a solid core, improvement of the heat reflection property, and improvement of the heat insulation effect, are exhibited.

Examples of the filler include those used as a modifying agent, such as calcium carbonate, clay, kaolin, bentonite, montmorillonite, talc, titanium dioxide, barium sulfate, zinc oxide, mica, a potassium titanate whisker, a magnesium oxysulfate whisker, an aluminum borate whisker, wollastonite, attapulgite, sepiolite, and silica; a ceramic, such as silicon nitride, boron nitride, aluminum nitride, boron oxide, alumina, and zirconia; a graphite, such as a natural graphite, an artificial graphite, a kish graphite, an expandable graphite, and an expanded graphite; a carbon black, such as an oil furnace black, a gas furnace black, a channel black, a thermal black, an acetylene black, and a lamp black.

The addition content of the filler is preferably 10 mass-% or more with reference to the total mass of a middle layer, and also preferably 90 mass-% or less. When the addition content of the filler is 10 mass-% or more, the light resistance, moldability and strength of a solid core can be improved. When the addition content of the filler is 90 mass-% or less, the moldability of a middle layer can be improved. The addition content of the filler is more preferably from 10 mass-% to 80 mass-%, and further preferably from 60 mass-% to 80 mass-%. Since within the range all of the light resistance and moldability of a thermochromic solid writing instrument, and the strength of a thermochromic solid writing instrument are improved, it is more preferable.

A middle layer according to the present invention may contain an excipient. As an excipient, for example, a wax, and a gelation agent may be used. As a wax, any of heretofore known waxes may be used, and specific examples thereof include a carnauba wax, a Japan wax, a beeswax, a microcrystalline wax, a montan wax, a candelilla wax, a sucrose fatty acid ester, a dextrin fatty acid ester, a polyolefin wax, a styrene-modified polyolefin wax, a paraffin wax, and stearic acid. As a gelation agent a heretofore known gelation agent may be used, and examples thereof include 12-hydroxystearic acid, dibenzylidene sorbitol, tribenzylidene sorbitol, an amino acid oil, and an alkali metal salt of a higher fatty acid. Among the above excipients a polyolefin wax, a sucrose fatty acid ester, and a dextrin fatty acid ester are preferable. Specific examples include waxes, such as polyethylene, polypropylene, polybutylene, an α-olefin polymer, an ethylene-propylene copolymer and an ethylene-butene copolymer, and an excipient usable for a solid core can be also used. Moreover it is preferable to use the same material as an excipient used for a solid core, because the interface between a solid core and a middle layer fuses together moderately to avoid unnecessary interfacial separation. The addition content of an excipient in a middle layer is preferably from 10 mass-% to 90 mass-% with reference to the total mass of a middle layer, and further preferably from 20 mass-% to 70 mass-%. Meanwhile, a middle layer may contain 2 or more kinds of the excipients.

A middle layer optionally provided in a solid writing instrument according to the present invention may contain, if necessary, various additives in order to impart various functions. Examples of an additive include a colorant, an antifungal agent, an antiseptic agent, an antibacterial agent, a UV absorber, a light stabilizer, a heat-absorbing material, a slip additive, and a perfume. Any of the additives may be used arbitrarily. A single additive may have a plurality of functions. For example, stearic acid functions as a slipping agent, and functions at the same time as an excipient. In a case where an additive having a function as a slip additive is added, a plurality of effects can be exhibited as improvement of the moldability, and the like. Further, since a UV absorber not only absorbs ultraviolet light but also prevents various materials contained in a middle layer from losing color by ultraviolet light, it may occasionally have also a function to improve the light stability or storage stability.

Further, a middle layer between a casing and a solid core may have a multilayer structure according to the present invention. For example, by placing between a solid core and a low heat conductivity layer another layer having appropriate hardness, a thermal expansion coefficient, or the like, the affinity between the solid core and the low heat conductivity layer can be enhanced further. Such another layer may be composed of components including a temperature sensitive allochroic color memory composition similar to those for a solid core, and may be unwritable. Two or more of such other layers may be placed. Further, a low heat conductivity layer may be provided with a coating layer composed of other coating components. Further, a low heat conductivity layer may be provided on the outer surface of a casing or on the outer surface of a display part to decrease heat transport. This is preferable because heat transport to a solid core during storage, *etc.* is suppressed to improve the light resistance and to cope with a volume change of a casing by providing on the outer surface of a casing a low heat transport layer composed of the afore-described materials for heat insulation to decrease heat transport by conduction, convection, and radiation, and/or for heat absorption to suppress heat transport to a solid core by absorbing heat.

Although there are no particular restrictions on the diameter of a solid core, the thickness of a casing, the thickness of a flexible film, and the thickness of a middle layer, the diameter of a solid core is preferably from 2 to 5 mm, and more preferably from 2.5 to 3.5 mm considering a line width. Although an outer diameter of a casing is determined depending on the outer diameter of a thermochromic solid writing instrument, the diameter of a solid core, the thicknesses of a middle layer, *etc.,* when the outer diameter of a casing exceeds 15 mm, due to thick diameter, a user with a small hand such as an infant cannot grip it properly nor stow it in a case, and when the outer diameter of a casing is less than 5 mm, its strength decreases. Consequently, the outer diameter of a casing is preferably from 5 mm to 20 mm, and the thickness is preferably from 1 mm to 5 mm from a viewpoint of pencil whittling property, and more preferably from 2 mm to 4 mm. The thickness of a flexible film is preferably from 1 µm to 200 µm from a viewpoint of durability and flexibility, and more preferably from 10 µm to 100 µm. Further, with respect to a middle layer, the thickness is dependent on a material to be used, *etc.* A large thickness is preferable in terms of a retarding effect on the heat transport, on the other hand, if it is too large, there may appear an adverse effect on the moldability or a script, and therefore the thickness is preferably from 0.1 to 1.0 mm, and more preferably from, 0.3 to 0.7 mm.

Examples of a production method for a solid writing instrument provided with a middle layer include (i) a formation method of inserting a solid core and a middle layer produced using extrusion molding or compression molding into a component constituting a casing and bonding them, and (ii) formation method according to triple coextrusion molding of a casing, a solid core, and a middle layer. According to a specific example, a middle layer is provided on the outer peripheral surface of a lump of a solid core, which is then subjected to compression molding with a press or the like to form a middle layer covering the outer peripheral surface of a solid core, the thus obtained solid core and middle layer is placed in a concavity of a component constituting a casing, and then the assembly is fixed together by adhesion or welding to obtain a thermochromic solid writing instrument.

Although it is typical with respect to a thermochromic solid writing instrument according to the present invention that a solid core, a middle layer, and a casing have the same length in a longitudinal direction, the posterior end of a solid core is preferably situated at a position anterior to the posterior end of a casing in a longitudinal direction, so that heat generated during formation of a decorative part on the outer surface of the casing conducts to the posterior end of the solid core less easily due to a space between the posterior end of the casing and the posterior end of the solid core.

In this connection, "anterior" means herein a side of a writing tip of a writing instrument, and "the posterior end of a solid core" means an end opposite to the writing tip of the solid core.

### <Heating Device and Cooling Device>

A thermochromic solid writing instrument according to the present invention can write on various writing surfaces, and the script is able to change its color by rubbing, or applying a heating device or a cooling device.

Examples of the heating device include an electric heating color changing device equipped with a resistance heating element, a heating color changing device filled with hot water, and a hair blower, and examples of the cooling device include a cooling device utilizing a Peltier device, a cooling color changing device filled with a coolant, such as cold water, and ice chips, and application of an ice pack, a refrigerator, or a freezer, and a friction member is preferably used as a means for changing the color by a simple method.

As the friction member, an elastic body of an elastomer, a plastic foam, *etc.* that can generate frictional heat by appropriate friction caused by rubbing is used preferably. For the friction member a material that reduces the volume by less than 10%, preferably less than 5%, when a script is written avoiding an overlap with a solid core (outer diameter 3.0 mmΦ× total length 60 mm) of a solid writing instrument up to total consumption, for example, on a writing paper (JIS P 3201) and then the script is subjected to thermal color change (for example in the case of color extinction, to a state where a script before the color change is visually not any more recognizable) with a friction member having the outer diameter 7 mm × total length 14 mmΦ, is preferable considering efficiency of heat generation by friction. Examples of a material for the friction member to be used favorably include a silicone resin, an SEBS resin (styrene-ethylene-butylene-styrene block copolymer), and a polyester resin.

Although the friction member can be an independent body separate from a thermochromic solid writing instrument, the same may be provided directly, or indirectly through a connection member, on a casing, or a casing itself may be a friction member, so that the portability becomes excellent. When the friction member is attached to a casing, by using a material having the volume reduction rate of a friction member of less than 10%, preferably less than 5%, rubbing can be performed favorably throughout the life of a solid writing instrument without change in a feel during rubbing. It is also preferable to select a material with a low volume reduction rate, and to place the friction member detachably, so that the same can be reused as a friction member for another solid writing instrument.

### <Second Thermochromic Solid Writing Instrument>

In a second embodiment a thermochromic solid writing instrument according to the present invention comprises a solid core containing at least a reversible thermochromic microcapsuled pigment and a casing holding the solid core, and is characterized in that the outer surface of the casing includes a decorative part having a display with a color, a letter, a symbol, or a figure, or a combination thereof, and a low heat conductivity layer suppressing heat transport in a radial direction from the casing to the solid core is provided between the casing and the solid core.

In the first embodiment it is essential that a decorative part is formed on the outer surface of a casing with a flexible film, but in the second embodiment the above is not essential but it is essential that a solid writing instrument is provided with a low heat conductivity layer suppressing heat transport in a radial direction from the casing to the solid core, by which unintended color change or color extinction of a solid core due to heat applied for forming a decorative part on the outer surface of the casing, or the like can be prevented.

### <Casing>

Examples of a material for forming a casing include similarly as in the first embodiment wood, a thermoplastic resin, and an elastomer.

### < Decorative Part>

Although in the second embodiment there is no particular restriction on a formation method for a decorative part with letters or patterns of a trade name, a color, *etc.* on the outer surface of the casing, and label adhesion, hot stamping, painting, transfer printing, *etc.* are conceivable, hot stamping and transfer printing are preferable considering detachment with time or decrease in print density. Since in a process according to such a method heat is generally applied in a printing, drying, or transferring step, the effects of the present invention are remarkable. In the case of a wood casing, a decorative part with letters or patterns of a trade name, a color, *etc.* on the outer surface of the casing according to the present invention is preferably formed by transfer of a film. This is because by transfer of a film a contact with the outside air is suppressed to suppress absorption of moisture by a casing, so that a dimension stable over time can be maintained.

### <Solid Core>

A solid core similar to the solid core used in the first embodiment can be used.

### <Low Heat Conductivity Layer>

It is essential that a solid writing instrument in the second embodiment is provided with a low heat conductivity layer between a casing and a solid core. As a low heat conductivity layer, a similar one as described in the section of the first embodiment may be used. Specific examples include a heat-insulating layer reducing heat transport by conduction, convection, or radiation, and a heat-absorbing layer suppressing heat transport to a solid core by absorbing heat.

Since in a conventional solid core a colorant was distributed throughout a solid core, a solid core was liable to lose its color after exposure to light for long time. Therefore, the second embodiment is preferable, because it becomes possible to prevent a solid core containing a colorant from being directly irradiated with ultraviolet light, which affects the colorant, by adding a filler in a low heat conductivity layer, and as the result to improve the light resistance of a solid core usable for writing. Further, in a case where a low heat conductivity layer contains a filler, effects, such as improvement of the moldability, suppression of decrease in the strength of a solid core, improvement of the heat reflection property, and improvement of the heat insulation effect, are exhibited. Such a layer may contain a filler, an excipient, another resin, and various additives.

A low heat conductivity layer according to the present invention may contain an elastomer resin. It is preferable that a resin is added to a low heat conductivity layer, because the moldability and strength of a solid writing instrument is improved. The addition content of a resin is decided according to the addition contents of a filler and an excipient, *etc.,* and is preferably from 1 mass-% to 10 mass-% with reference to the total mass of a low heat conductivity layer, because the performance of a solid writing instrument is improved as described above.

A low heat conductivity layer may contain various resins according to the present invention, and preferably contains as a resin any one selected from the elastomer resins. However, a low heat conductivity layer may contain a resin other than the elastomer resins, to the extent that the effect of the present invention is not impaired. Examples of the resin include a thermoplastic resin, such as poly(vinyl alcohol), a styrenic resin, and a styrene-acrylic resin. Specifically, the content of such a resin is preferably 50 mass-% or less with reference to the total mass of resins contained in a low heat conductivity layer, more preferably 10 mass-% or less, and most preferably such a resin is not contained at all.

As the filler, those listed in the first embodiment or the like may be used.

The addition content of the filler is preferably 10 mass-% or more with reference to the total mass of a low heat conductivity layer, and also preferably 90 mass-% or less. When the addition content of the filler is less than 10 mass-%, there is a tendency that the light resistance and moldability of a solid writing instrument, and the strength of a solid writing instrument become inferior. When the addition content of the filler is higher than 90 mass-%, the moldability of a low heat conductivity layer tends to deteriorate. The addition content of the filler is more preferably from 10 mass-% to 80 mass-%, and further preferably from 60 mass-% to 80 mass-%. Since within the range all of the light resistance and moldability of a solid writing instrument, and the strength of a solid writing instrument are improved, it is more preferable.

A low heat conductivity layer according to the present invention may contain an excipient. As an excipient, those listed for the first embodiment may be used. Meanwhile, it is preferable to use the same material as an excipient used for a solid core, because the interface between a solid core and a low heat conductivity layer fuses together moderately to avoid unnecessary interfacial separation. The addition content of an excipient in a low heat conductivity layer is preferably from 10 mass-% to 90 mass-% with reference to the total mass of a low heat conductivity layer. Since the moldability can be excellent, it is preferable to be within the range. The addition content of an excipient is more preferably from 10 mass-% to 90 mass-%, and further preferably from 20 mass-% to 70 mass-%, and within the range the moldability of a solid writing instrument and the light resistance of a solid writing instrument are further improved.

A low heat conductivity layer to be used for a solid writing instrument according to the present invention may contain, if necessary, various additives in order to impart various functions. Examples of an additive include a colorant, an antifungal agent, an antiseptic agent, an antibacterial agent, a UV absorber, a light stabilizer, a heat-absorbing material, a slip additive, and a perfume. Any of the additives may be used arbitrarily. A single additive may have a plurality of functions. For example, stearic acid functions as a slipping agent, and functions at the same time as an excipient. In a case where an additive having a function as a slip additive is added, 2 or more effects can be exhibited as improvement of the moldability, and the like. Further, since a UV absorber not only absorbs ultraviolet light but also prevents various materials contained in a low heat conductivity layer from losing color by ultraviolet light, it may occasionally have also a function to improve the light stability or storage stability.

Further, a layer other than a low heat conductivity layer may be provided between a casing and a solid core, and the layer between a casing and a solid core may have a multilayer structure. For example, by placing between a solid core and a low heat conductivity layer another layer having appropriate hardness, a thermal expansion coefficient, or the like, the affinity between the solid core and the low heat conductivity layer can be enhanced further. Such another layer may be composed of components including a temperature sensitive allochroic color memory composition similar to those for a solid core, and may be unwritable. Two or more of such other layers may be placed. Further, a low heat conductivity layer may be provided with a coating layer composed of other coating components. Further, a low heat conductivity layer may be provided on the outer surface of a casing or on the outer surface of a display part to decrease heat transport. This is preferable because heat transport to a solid core during storage, *etc.* is suppressed to improve the light resistance and to cope with a volume change of a casing by providing on the outer surface of a casing a low heat transport layer composed of the afore-described materials for heat insulation to decrease heat transport by conduction, convection, and radiation, and/or for heat absorption to suppress heat transport to a solid core by absorbing heat.

With respect to the diameter of a solid core, the thickness of a casing, and the thickness of a flexible film, the preferable range defined for the first embodiment is similarly preferable for the second embodiment. Further, with respect to a low heat conductivity layer, the thickness is dependent on a material to be used. A large thickness is preferable in terms of a retarding effect on the heat transport, on the other hand, if it is too large, there may appear an adverse effect on the moldability or a script, and therefore the thickness is preferably from 0.1 to 1.0 mm, and more preferably from, 0.3 to 0.7 mm.

Examples of a production method for a thermochromic solid writing instrument according to the present invention include (i) a formation method of inserting a solid core and a low heat conductivity layer produced using extrusion molding or compression molding into a component constituting a casing and bonding them, and (ii) formation method according to triple coextrusion molding of a casing, a solid core, and a low heat conductivity layer. According to a specific example, a low heat conductivity layer is provided on the outer peripheral surface of a lump of a solid core, which is then subjected to compression molding with a press or the like to form a low heat conductivity layer covering the outer peripheral surface of a solid core, the thus obtained solid core and low heat conductivity layer is placed in a concavity of a component constituting a casing, and then the assembly is fixed together by adhesion or welding to obtain a thermochromic solid writing instrument.

As in the first embodiment the posterior end of a solid core is preferably situated at a position anterior to the posterior end of a casing in a longitudinal direction, so that heat generated during formation of a decorative part on the outer surface of the casing conducts to the posterior end of the solid core less easily due to a space between the posterior end of the casing and the posterior end of the solid core.

### <Heating Device and Cooling Device>

A thermochromic solid writing instrument according to the present invention can write on various writing surfaces, and the script is able to change its color by rubbing, or applying a heating device or a cooling device.

As for the heating device and the cooling device, those listed for the first embodiment may be similarly used for the second embodiment.

### Example 101

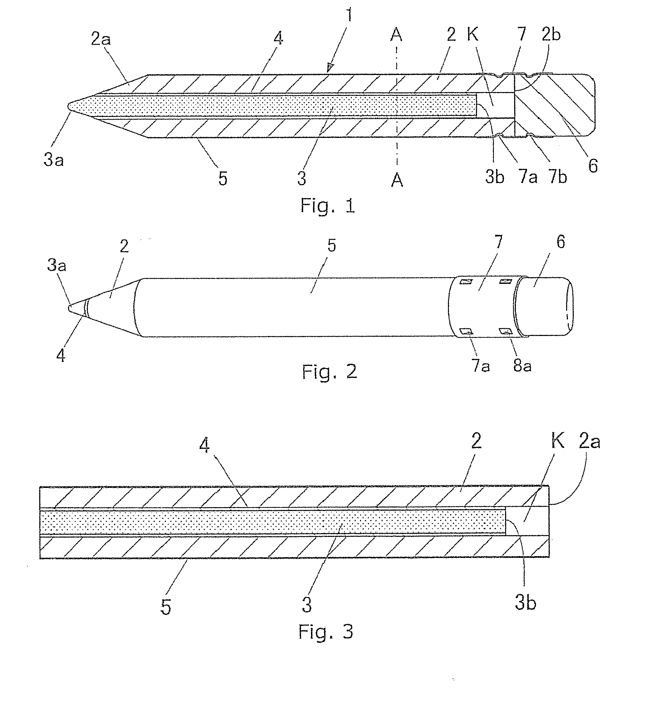

A thermochromic solid writing instrument 1 shown in Figure 1 to Figure 4 is provided with a solid core 3 placed in a round casing 2 made of wood (wood casing), and a middle layer 4 placed between the solid core 3 and the casing 2. Meanwhile, the posterior end 3b of the solid core 3 is situated at a position anterior to the posterior end 2b of the wcasing 2 in a longitudinal direction. Further, a friction member 6 made of an SEBS resin is attached to the posterior end of the casing 2 using a connection member 7. Further, a decorative part 5 including a letter, a pattern, *etc.* is provided all around the outer surface of the casing 2 by transfer printing with a film.

Specifically, a solid core 3 and a middle layer 4 are prepared by winding a kneaded material for a middle layer 4 around the outer peripheral surface of a kneaded material for a solid core 3, and performing compression molding with a press to form a shape with an outer diameter of 3 mmΦ, and a length of 60 mm (a solid core 3 usable for writing has a diameter of 2 mm, and a middle layer 4 has a thickness of 0.5 mm), so that a middle layer 4 is coated on the outer peripheral surface of a solid core 3 usable for writing. Thereafter, a core composed of the solid core 3 and the middle layer 4 is retained in a casing 2 with an outer diameter of 8 mm having been prepared in advance, and fixed with an adhesive. In this case, the posterior end 3b of the solid core 3 is situated at a position anterior to the posterior end 2b of the casing 2 in a longitudinal direction, and a space K is formed at the posterior end of the solid core 3.

Thereafter, a decorative part 5 is provided on the outer surface of the casing 2 by performing transfer printing at 240°C on the outer surface of the casing 2 using a pink-colored poly(ethylene terephthalate) film, to which a letter and a pattern have been attached in advance.

Further, thereafter, the frontal part of a connection member 7 is put on the posterior end of the casing 2, and a part 7a facing the casing 2 is pressed at 3 different positions along the circumference from outside to fix the connection member 7 to the casing 2. Then, into the posterior part of the connection member 7 the frontal part of a friction member 6 is inserted, and a part 7b facing the friction member 6 is pressed at 3 different positions along the circumference from outside to fix the friction member 6 to the connection member 7. A writing region 3a is formed from a state shown in Figure 3 by whittling away the frontal tip 2a of the casing 2 to expose the solid core 3 to the outside as usable for writing to complete a thermochromic solid writing instrument 1 of Example 101. The composition, *etc.* of of the microcapsuled pigment, the solid core, and the middle layer are described below.

### Production of Microcapsuled Pigment A

A temperature sensitive allochroic color memory composition composed of: as the component (a): 1.0 part of 2-(dibutylamino)-8-(dipentylamino)-4-methyl-spiro [5H-[1]benzopyrano[2,3-g]pyrimidine-5,1'(3'H)-isobenzofuran]-3-one, as the component (b): 3.0 parts of 4,4'-(2-ethylhexane-1,1-diyl)diphenol, and 5.0 parts of 2,2-bis(4'-hydroxyphenyl)-hexafluoropropane, and as the component (c): 50.0 parts by mass of 4-benzyloxyphenylethyl caprate was heated to dissolve, to which 30.0 parts by mass of an aromatic isocyanate prepolymer as a capsule wall material and 40.0 parts by mass of a co-solvent were added. The product solution was emulsified in a 8% poly(vinyl alcohol) aqueous solution and stirred with heating, followed by addition of 2.5 parts by mass of a water-soluble modified aliphatic amine and additional stirring to obtain finally a thermochromic microcapsule suspension. The suspension was centrifuged to isolate a thermochromic microcapsule. The microcapsule had an average particle size of 2.3 µm, exhibited hysteresis characteristics of t₁: -20°C, t₂: -10°C, t₃: 48°C, t₄: 58°C, ΔH: 68°C, temperature sensitive allochroic color memory composition : capsule wall =2.6 : 1.0, and changed its color reversibly from pink to colorless, and from colorless to pink.

| Production of Solid Core | |
|---|---|
| Microcapsuled pigment A | 40 parts by mass |
| Polyolefin wax | 10 parts by mass |
| (SANWAX 131-P, softening point 110°C, penetration 3.5, made by Sanyo Chemical Industries, Ltd.) | |
| Sucrose fatty acid ester | 10 parts by mass |
| (RYOTO Sugar Ester P-170, made by Mitsubishi-Kagaku Foods Corporation) | |
| Poly(vinyl alcohol) | 2 parts by mass |
| Talc | 38 parts by mass |

The above composition was kneaded with a kneader to obtain a kneaded material for a solid core usable for writing.

| Production of Middle Layer | |
|---|---|
| Talc (filler) | 70 parts by mass |
| Polyolefin wax | 10 parts by mass |
| (SANWAX 131-P, softening point 110°C, penetration 3.5, made by Sanyo Chemical Industries, Ltd.) | |
| Sucrose fatty acid ester | 10 parts by mass |
| (RYOTO Sugar Ester P-170, made by Mitsubishi-Kagaku Foods Corporation) | |
| Ethylene-vinyl acetate copolymer (elastomer resin) | 10 parts by mass |
| (EVAFLEX EV150 (trade name), durometer A hardness 68, made by Du Pont-Mitsui Polychemicals Co., Ltd.) | |

The above composition was kneaded with a kneader to obtain a kneaded material for a middle layer.

Although in this Example a thermochromic solid writing instrument having a single solid core in a casing is described for the sake of convenience, for example, 2 differently-colored solid cores may be aligned tandemly to have a dual head structure like a dual color pencil.

Further, although in this Example a casing and a solid core are fixed together by adhesion or welding for the sake of convenience, there is no particular restriction on the fixing method.

### Example 201

A thermochromic solid writing instrument was yielded by a similar method as in Example 101 except that the middle layer 4 was replaced with a low heat conductivity layer 4 with a thickness of 0.25 mm.

### Examples 202 to 207

Thermochromic solid writing instruments were yielded by the same method as in Example 2 according to the compositions shown in Table 1.

### Examples 208 to 211

Thermochromic solid writing instruments were yielded by the same method as in Example 201 according to the compositions shown in Table 2.

The composition, *etc.* of of a low heat conductivity layer (heat-absorbing layer) are described below.

### Example 212

Thermochromic solid writing instruments were yielded by the same method as in Example 2 except that the composition of a low heat conductivity layer was replaced with the following composition.
Production of Low Heat Conductivity Layer (Heat-absorbing Layer)

| | |
|---|---|
| Talc (filler) | 66 parts by mass |
| Polyolefin wax | 7 parts by mass |
| (SANWAX 131-P, softening point 110°C, penetration 3.5, made by Sanyo Chemical Industries, Ltd.) | |
| Sucrose fatty acid ester | 7 parts by mass |
| (RYOTO Sugar Ester P-170, made by Mitsubishi-Kagaku Foods Corporation) | |
| Myristyl alcohol | 15 parts by mass |
| (KALCOL 4098, melting point 40°C, made by Kao Corporation) | |
| Ethylene-vinyl acetate copolymer (elastomer resin) | 5 parts by mass |
| (EVAFLEX EV550 (trade name), durometer A hardness 93,made by Du Pont-Mitsui Polychemicals Co., Ltd.) | |

The above composition was kneaded with a kneader to obtain a kneaded material for a heat-insulating layer.

### Comparative Example 201

A thermochromic solid writing instrument was yielded similarly as in Example 201 except that a low heat conductivity layer coating the outer peripheral surface of a solid core was not provided between a casing and a solid core.
The composition of a solid core of Comparative Example 1 is shown below.

| Production of Solid Core | |
|---|---|
| Microcapsuled pigment A | 40 parts by mass |
| Polyolefin wax | 10 parts by mass |
| (SANWAX 131-P, softening point 110°C, penetration 3.5, made by Sanyo Chemical Industries, Ltd.) | |
| Sucrose fatty acid ester | 10 parts by mass |
| (RYOTO Sugar Ester P-170, made by Mitsubishi-Kagaku Foods Corporation) | |
| Poly(vinyl alcohol) | 2 parts by mass |
| Kaolin | 38 parts by mass |

The above composition was kneaded with a kneader and the obtained kneaded material was subjected to compression molding with a press to a shape with an outer diameter of 3.5 mmΦ, and a length of 60 mm to obtain a solid core usable for writing.

### Comparative Examples 202 and 203

Thermochromic solid writing instruments were yielded by the same method as in Comparative Example 1 according to the compositions shown in Table 2.

The thermochromic solid writing instruments produced in Examples 201 to 212, and Comparative Examples 201 to 203 were evaluated in terms of low heat conductivity to a solid core during formation of a display part, affinity of a thermochromic solid writing instrument, impact resistance according to the following method. The results are shown in Table 1 and 2.
(1) Low heat conductivity: Film transfer printing on to a casing was conducted at 240°C, and cross-sections (3 different positions in a longitudinal direction) of a casing, a low heat conductivity layer, and a solid core were visually examined for rating a color change state of a solid core.
   A: Excellent, because thermal color change in a solid core is not recognized.
   B: Practically acceptable, although slight thermal color change in a solid core (less than 0.2 mm) is recognized.
   C: Inadequate, because thermal color change in a solid core (not less than 0.2 mm) is recognized.
(2) Affinity: A solid core provided with a low heat conductivity layer was examined visually, and further after applying a torsional stress the degree of breakage was observed for rating the affinity between a low heat conductivity layer and a solid core.
   A: Affinity is excellent, because a crack or a marginal crack is not recognized.
   B: Affinity is good, although some marginal cracks are recognized.
   C: Affinity is practically acceptable, although some marginal cracks are recognized.
   D: Affinity is inadequate, because cracks are recognized.
(3) Impact resistance: A thermochromic solid writing instrument was dropped from the height of 1 m onto a glass plate, and the broken condition was rated visually.
   A: Not broken.
   B: There was no substantial breakage, except partial chipping.
   C: Partially fractured.
   D: Broken into fragments.
(4) Moldability: The appearance of a solid core provided with a low heat conductivity layer was visually rated. Additionally, the variance of the core diameter of a solid core provided with a low heat conductivity layer in a longitudinal direction was measured with a micrometer for rating the dimensional precision.
   A: Superior in moldability, as well as dimensional precision.
   B: Superior in moldability.
   C: Moldable, although dimensional precision is slightly inferior.
   D: Molding is not possible.

**[Table 1]**

| Table 1 | | | | | | | | | |
|---|---|---|---|---|---|---|---|---|---|
| | Item | Material | Example | | | | | | |
| | | | 201 | 202 | 203 | 204 | 205 | 206 | 207 |
| Solid core | Colorant | Microcapsuled pigment A | 40 | 40 | 40 | 40 | 40 | 40 | 40 |
| | Filler | Talc | 38 | 38 | 38 | 38 | 38 | 38 | 38 |
| | | Kaolin | | | | | | | |
| | Excipient | Sucrose fatty acid ester | 10 | 10 | 10 | 10 | 10 | 10 | 10 |
| | | Polyethylene wax | 10 | 10 | 10 | 10 | 10 | 10 | 10 |
| | Resin | Poly(vinyl alcohol) | 2 | 2 | 2 | 2 | 2 | 2 | 2 |
| Low heat conductivity layer | Filler | Talc | 70 | 70 | 70 | 70 | | 70 | 70 |
| | | Kaolin | | | | | 70 | | |
| | | Calcium carbonate | | | | | | | |
| | Excipient | Sucrose fatty acid ester | 10 | 10 | 10 | 10 | 10 | 10 | 7.5 |
| | | Polyethylene wax | 10 | 10 | 10 | 10 | 10 | 10 | 7.5 |
| | Slip additive | Stearic acid | | | | | | | 5 |
| | Heat-absorbing material | | | | | | | | |
| | Resin | EVA^{*1} | 10 | 9 | 5 | 1 | 7 | | |
| | | EVA^{*2} | | | | | | 10 | 10 |
| | | EVA^{*3} | | | | | | | |
| | | EVA^{*4} | | | | | | | |
| | | EEA^{*5} | | | | | | | |
| | | Poly(vinyl alcohol)^{*6} | | 1 | 5 | 9 | 3 | | |
| | | | | | | | | | |
| Evaluation | Low heat conductivity | | A | A | A | A | A | A | A |
| | Affinity | | A | A | C | C | C | A | A |
| | Impact resistance | | A | A | A | C | A | A | A |
| | Moldability | | A | A | A | A | A | A | A |

| | | | | | | | | | |
|---|---|---|---|---|---|---|---|---|---|
| *1: Ethylene-vinyl acetate copolymer (EVAFLEX EV150, durometer A hardness 68, made by Du Pont-Mitsui Polychemicals Co., Ltd.) *2: Ethylene-vinyl acetate copolymer (EVAFLEX EV550, durometer A hardness 93, made by Du Pont-Mitsui Polychemicals Co., Ltd.) *3: Ethylene-vinyl acetate copolymer (EVAFLEX V421 (trade name), durometer A hardness 82, made by Du Pont-Mitsui Polychemicals Co., Ltd.) *4: Ethylene-vinyl acetate copolymer (EVAFLEX EV45LX (trade name), durometer A hardness 31, made by Du Pont-Mitsui Polychemicals Co., Ltd.) *5: Ethylene-acrylate copolymer (NUC-6170 (trade name), durometer A hardness 89, made by Nippon Unicar Co., Ltd.) *6: Poly(vinyl alcohol) resin (GOHSENX LL-920 (trade name), durometer A hardness: unmeasurable (over 100), durometer D hardness 74, made by The Nippon Synthetic Chemical Industry Co., Ltd.) | | | | | | | | | |

**[Table 2]**

| Table 2 | | | | | | | | | | |
|---|---|---|---|---|---|---|---|---|---|---|
| | Item | Material | Example | | | | | Comparative Example | | |
| | | | 208 | 209 | 210 | 211 | 212 | 201 | 202 | 203 |
| Solid core | Colorant | Microcapsuled pigment A | 30 | 40 | 40 | 40 | 40 | 40 | 40 | 40 |
| | Filler | Talc | 48 | 38 | 38 | 38 | 38 | 38 | | 38 |
| | | Kaolin | | | | | | | 38 | |
| | Excipient | Sucrose fatty acid ester | 10 | 10 | 10 | 10 | 10 | 10 | 10 | 10 |
| | | Polyethylene wax | 10 | 10 | 10 | 10 | 10 | 10 | 10 | 10 |
| | Resin | Poly(vinyl alcohol) | 2 | 2 | 2 | 2 | 2 | 2 | 2 | 5 |
| Low heat conductivity layer | Filler | Talc | 75 | 70 | 70 | | 66 | | | |
| | | Kaolin | | | | | | | | |
| | | Calcium carbonate | | | | | | | | |
| | Excipient | Sucrose fatty acid ester | 10 | 10 | 10 | 49 | 7 | | | |
| | | Polyethylene wax | 10 | 10 | 10 | 49 | 7 | | | |
| | Slip additive | Stearic acid | | | | | | | | |
| | Heat-absorbing material | Myristy alcohol | | | | | 15 | | | |
| | Resin | EVA*1 | | | 10 | | | | | |
| | | EVA*2 | | | | | 5 | | | |
| | | EVA*3 | 5 | | | | | | | |
| | | EVA*4 | | | 10 | | | | | |
| | | EEA*5 | | 10 | | | | | | |
| | | Poly(vinyl alcohol)*6 | | | | 2 | | | | |
| Evaluation | Low heat conductivity | | A | A | A | B | A | C | C | C |
| | Affinity | | A | A | A | B | A | A | A | A |
| | Impact resistance | | A | A | A | C | A | D | D | D |
| | Moldability | | A | A | C | C | A | B | B | B |

As obvious also from the results shown in Table 1 and Table 2, a solid writing instrument according to the present invention was superior in low heat conductivity as seen from Examples 201 to 212. Further, the light resistance was improved compared to the thermochromic solid writing instruments of Comparative Examples. It is obvious that the thermochromic solid writing instruments in Examples 201 to 212, in which a low heat conductivity layer contains a filler, are superior in the low heat conductivity and the impact resistance.

### [Industrial Applicability]

A thermochromic solid writing instrument according to the present invention can be applied to various writing instruments, such as a felt pen, a pencil, and a colored pencil, as well as a drawing material for picture coloring, picture drawing, *etc.,* and a heat sensitive material such as a temperature indicator. When a friction member is used, the same can be used generating little eraser debris, exhibiting superior color change or color extinction characteristics, and therefore also applied to a toy for educating, for example, a calculation, such as an addition, and a subtraction.

### [Reference Signs List]

- 1: Thermochromic solid writing instrument
- 2: Casing
- 2a: Frontal tip
- 2b: Posterior end
- 3: Solid core
- 3a: Writing region
- 3b: Posterior end
- 4: Middle layer
- 5: Decorative part (film)
- 6: Friction member
- 7: Connection member
- t₁: Completely colored temperature of script by thermal color extinction type solid writing instrument of the present invention
- t₂: Coloration initiation temperature of script by thermal color extinction type solid writing instrument of the present invention
- t₃: Color Extinction initiation temperature of script by thermal color extinction type solid writing instrument of the present invention
- t₄: Completely colorless temperature of script by thermal color extinction type solid writing instrument of the present invention
- ΔH: Temperature range showing degree of hysteresis

## Claims

1. A thermochromic solid writing instrument comprising a solid core containing at least a reversible thermochromic microcapsuled pigment and a casing holding the solid core, wherein an outer surface of the casing includes a decorative part having a display with a color, a letter, a symbol, or a figure, or a combination thereof, and the decorative part is formed of a flexible film.

2. The thermochromic solid writing instrument according to claim 1 provided with a middle layer, suppressing detachment caused by a volume change of the casing and the solid core, between an inner peripheral surface of the casing and an outer peripheral surface of the solid core.

3. The thermochromic solid writing instrument according to claim 1 provided with a middle layer, having a thermal conductivity coefficient lower than that of the solid core, between an inner peripheral surface of the casing and an outer peripheral surface of the solid core.

4. The thermochromic solid writing instrument according to claim 1 provided with a middle layer, having heat absorptivity higher than that of the reversible thermochromic microcapsuled pigment, between an inner peripheral surface of the casing and an outer peripheral surface of the solid core.

5. A thermochromic solid writing instrument comprising a solid core containing at least a reversible thermochromic microcapsuled pigment and a casing holding the solid core, wherein an outer surface of the casing includes a decorative part having a display with a color, a letter, a symbol, or a figure, or a combination thereof, and a low heat conductivity layer suppressing heat transport in a radial direction from the casing to the solid core is further provided between an inner peripheral surface of the casing and an outer peripheral surface of the solid core.

6. The thermochromic solid writing instrument according to claim 5, wherein the low heat conductivity layer is a heat-insulating layer having a thermal conductivity coefficient lower than that of the solid core.

7. The thermochromic solid writing instrument according to claim 5, wherein the low heat conductivity layer is a heat-absorbing layer having heat absorptivity higher than that of the reversible thermochromic microcapsuled pigment.

8. The thermochromic solid writing instrument according to any one of claims 1 to 7, wherein the posterior end of the solid core is positioned anterior to the posterior end of the casing in a longitudinal direction.
